# EUROPÄISCHE PATENTSCHRIFT

(11) **EP 0 994 654 B1**
(45) Veröffentlichungstag und Bekanntmachung des Hinweises auf die Patenterteilung: **09.04.2003**
(21) Anmeldenummer: 98935000.4
(22) Anmeldetag: 26.06.1998
(51) Int. Cl.: A22C 13/00, C09D 103/00

(54) **STÄRKE UND/ODER MODIFIZIERTE STÄRKE UND WEICHMACHER ENTHALTENDE ZUSAMMENSETZUNGEN**
COMPOSITIONS CONTAINING STARCH AND/OR MODIFIED STARCH AND PLASTICISERS
COMPOSITIONS CONTENANT DE L'AMIDON ET/OU DE L'AMIDON MODIFIE ET UN PLASTIFIANT

(30) Priorität: 09.07.1997 DE 19729306
(43) Veröffentlichungstag der Anmeldung: 26.04.2000
(73) Patentinhaber: Celanese Ventures GmbH, 65926 Frankfurt am Main (DE)
(72) Erfinder: BENGS, Holger, D-60598 Frankfurt am Main (DE); GRANDE, Jürgen, D-65812 Bad Soden (DE)
(74) Vertreter: Luderschmidt, Schüler & Partner
(86) Internationale Anmeldenummer: EP9803919
(87) Internationale Veröffentlichungsnummer: WO99002040

(56) Entgegenhaltungen:
- EP-A- 0 428 965
- EP-A- 0 709 030
- WO-A-92/19680
- WO-A-95/04083
- CH-A- 313 774
- DE-A- 2 911 475
- DE-A- 3 416 406
- DE-A- 3 543 633
- FR-A- 1 333 576
- US-A- 4 289 668
- US-A- 5 224 989
- US-A- 5 620 757

## Beschreibung

Die Erfindung betrifft Zusammensetzungen, welche Stärke und/oder modifizierte Stärke und Weichmacher sowie ggf. weitere Zusätze enthalten, die zu Formkörpern, insbesondere zu biologisch abbaubaren Formkörpern verarbeitet werden können, sowie die Verwendung der Zusammensetzungen zur Herstellung von Formkörpern.

Mit dem ständig wachsenden Umweltbewußtsein sowie den stets strenger werdenden Vorschriften hinsichtlich Abfallbeseitigung bzw. - verwertung haben die Anstrengungen, biologisch abbaubare Massen zur Herstellung von Formkörpern zu benutzen stark zugenommen. Hinzu kommt, daß man sich mehr und mehr bemüht, dort, wo es möglich ist, anstelle von Materialien auf Erdölbasis solche auf Basis von nachwachsenden Rohstoffen einzusetzen. Ferner sind Stoffe auf natürlicher Basis vielfach physiologisch unbedenklicher.

Stärke sowie modifizierte Stärke, allein oder auch in Mischung mit anderen Polymeren, insbesondere Biopolymeren, gehören zu den nachwachsenden Rohstoffen, die stets mehr an Bedeutung gewinnen, vor allem auch für die Herstellung von Formkörpern wie z.B. Filmen und Folien. Dabei stellen sich für den Verarbeiter eine ganze Reihe von Problemen. Um durch Formgebung Stärke, modifizierte Stärke und auch Mischungen mit anderen Polymeren gut verarbeiten zu können, ist eine möglichst innige Vermischung, d.h. Homogenisierung der Komponenten erforderlich, insbesondere, wenn die Massen thermoplastisch verarbeitet werden sollen. Ferner kommt es darauf an, daß die Mischung bei der Verformung genügend weichgemacht ist, um nicht zu hohe Verformungstemperaturen zu benötigen und damit eine Zersetzung der Komponenten in Kauf zu nehmen. Ferner soll der Formkörper nicht nur gut biologisch abbaubar sein, sondern auch eine möglichst homogene innere Struktur und gute mechanische Eigenschaften wie Festigkeit und Elastizität besitzen. Insbesondere wird für die meisten Anwendungen gefordert, daß die Sprödigkeit und der Abrieb möglichst gering ist. Auch soll der Weichmacher umweltverträglich sein, d.h. biologisch abbaubar und physiologisch unbedenklich sein.

Es ist bereits eine ganze Reihe von Formmassen auf Basis von Stärke bekannt, die Weichmacher enthalten und zu Formkörpern verarbeitet werden können.

So wird in der US-PS-3,312,560 beschrieben, wie man aus Amylose unter Verwendung von Diglyzerin als Weichmacher Filme aus wäßrigen Lösungen durch Koagulation herstellen kann. In Gegenwart von etwas Wasser kann die mit Diglyzerin weichgemachte Amylose auch mittels Extrusion zu Filmen verarbeitet werden. Das Verfahren ist aber auf die Verarbeitung von Amylose sowie auf Gemische von Amylose mit geringen Gehalten an Amylopektin bzw. chemisch modifizierter Amylose beschränkt. Nachteilig wirkt sich zusätzlich aus, daß Diglyzerin zunächst synthetisch hergestellt werden muß.

In der EP-A2-0 609 983 werden Stärke mit mindestens zwei Zuckeralkoholen von Mono- oder Disacchariden als Weichmacher sowie Wasser enthaltende Zusammensetzungen beschrieben, aus denen biologisch abbaubare Formkörper hergestellt werden können, dabei werden auch Emulgatoren mitverwendet. Als zum Stand der Technik gehörende Weichmacher für Stärkeprodukte werden in dieser Schrift u.a. niedermolekulares Propylenglycol, Sorbit, Mannit, Polyvinylalkohol genannt. Die Zusammensetzungen können mittels eines Extruders zunächst zu Granulat verarbeitet werden, das dann später z.B. mittels Spritzguß zu Formkörpern weiterverarbeitet werden kann. Nachteil des dort beschriebenen Verfahrens ist die Verwendung des Emulgators, der neben den bekannten chemischen Effekten wie geringe thermische Stabilität auch eine Neigung zur Migration an die Oberfläche zeigt. Der Verarbeitungsprozeß ist komplizierter und mit zusätzlichen Kosten verbunden. Zudem bewirkt die Abmischung von mindestens zwei Zuckeralkoholen mit der dort angegebenen Menge Wasser, daß die Formkörper brüchig sind.

Thermoplastische Mischungen von Stärke und anderen Polymeren wie Proteine werden z.B. in der WO-A1-93/19125 beschrieben. Dabei ist zunächst eine Vernetzung z.B. durch Aldehyde erforderlich. Als Weichmacher werden vor allem Polyhydroxyverbindunden und verschiedene Ester empfohlen. Aufgrund des Vernetzungsschrittes erhält man Produkte, die nur einen sehr engen Verarbeitungsbereich aufweisen. Die Reaktion ist sehr empfindlich und störanfällig, was auf Kosten der Verarbeitbarkeit geht.

In der WO 90/05161 werden sogenannte Gleitmittel auf Fettsäurebasis (Fette, Lecithine, Fettsäuren) beschrieben. Diese Verbindungen, die auch freie Carboxylgruppen besitzen, erleichtern zwar den Verarbeitungsvorgang, haben jedoch den Nachteil, daß sie allein Stärke nicht ausreichend plastifizieren können.

In der US-PS 5,397,834 werden biologisch abbaubare, thermoplastische Zusammensetzungen beschrieben, die auf der Basis von Proteinen und Aldehydstärke aufgebaut sind, wobei Aldehydstärke und Proteine miteinander vernetzt sind. Neben Weichmachern, Gleitmitteln, Streckmitteln können die Zusammensetzungen auch Antioxidantien, u.a. 0,001 bis 1% Ascorbinsäure, vorzugsweise in Form des Ascorbylpalmitats, enthalten.

Obwohl bereits eine ganze Reihe von Zusammensetzungen, welche Stärke bzw. modifizierte Stärke und Weichmacher enthalten, sowie Verfahren zur Herstellung von Formkörpern aus derartigen Zusammensetzungen bekannt sind, besteht ein Bedürfnis nach derartigen Zusammensetzungen, die Vorteile gegenüber Produkten gemäß dem Stand der Technik bieten.

Aufgabe der Erfindung ist es deshalb, Stärke und/oder modifizierte Stärke sowie Weichmacher enthaltende Zusammensetzungen zur Verfügung zu stellen, die einfach und wirtschaftlich herstellbar sind, die eine gute Homogenität aufweisen, die auch in Mischung mit anderen Polymeren, insbesondere mit Biopolymeren wie Proteine, sehr homogen sind, die gut thermoplastisch verarbeitbar sind, physiologisch unbedenklich sind, die biologisch abbaubar sind und vorteilhaft zu technisch nutzbaren Formkörpern verarbeitet werden können, die sich durch gute Homogenität auszeichnen, die ferner gute mechanische Eigenschaften wie ausgezeichnete Flexibilität aufweisen und bei denen der Weichmacher nicht oder kaum zur Migration neigt.

Diese Aufgabe wird gelöst durch Stärke und/oder modifizierte Stärke und Weichmacher enthaltende Zusammensetzungen zur Herstellung von Formkörpern, insbesondere biologisch abbaubaren Formkörpern, die dadurch gekennzeichnet sind, daß die Zusammensetzungen mindestens ein Polymer auf Basis von Stärke und/oder modifizierter Stärke und als Weichmacher von Aldosen und/oder Ketosen abgeleitete Polyhydroxycarbonsäuren bzw. deren Lactone ausgenommen Ascorbinsäure in Mengen bis zu 1 Gew.-%, bezogen auf die Feststoffe der Zusammensetzungen, sowie ggf. weitere Polymere, insbesondere Biopolymere und Zusatzstoffe wie Streckmittel, Gleitmittel, Entformungsmittel, Farbstoffe, Wasser und dgl. enthalten.

Weitere vorteilhafte Ausführungsformen der erfindungsgemäßen Zusammensetzungen finden sich in den Ansprüchen 2 bis 16. Die Ansprüche 17 bis 22 geben besonders vorteilhafte Verwendungen wieder. Herstellungsverfahren werden in den Ansprüchen 23 und 24 beschrieben.

Eine Gruppe von Stärken, die im Rahmen der Erfindung zum Einsatz gelangen können, umfaßt die aus pflanzlichen Rohstoffen gewonnenen Stärken. Hierzu zählen unter anderem Stärken aus Knollen, wie Kartoffeln, Maniok, Maranta, Batata, aus Samen wie Weizen, Mais, Roggen, Reis, Gerste, Hirse, Hafer, Sorghum, aus Früchten, wie Kastanien, Eicheln, Bohnen, Erbsen, u. a. Hülsenfrüchten, Bananen, sowie aus Pflanzenmark, z.B. der Sagopalme.

Die im Rahmen der Erfindung verwendbaren Stärken bestehen im wesentlichen aus Amylose und Amylopektin, in wechselnden Mengenverhältnissen.

Besonders gute Ergebnisse erzielt man unter anderem mit Stärken aus Kartoffeln (z.B. ®Toffena der Fa. Südstärke), Mais (z.B. Maize Starch der Fa. National Starch) oder auch Polyglucanen, die sich durch einen perfekt linearen Aufbau der Polymere auszeichnen.

Die Molekulargewichte der erfindungsgemäß nützlichen Stärken können über einen weiten Bereich variieren. Einsetzbar sind als Basis der erfindungsgemäßen thermoplastischen Mischung solche Stärken, die im wesentlichen aus einem Gemisch von Amylose und Amylopektin bestehen, mit Molekulargewichten M_{w} im Bereich zwischen 5x10⁴ und 1x10⁷. Bevorzugt werden längerkettige Polymere mit Molekulargewichten M_{w} zwischen 1x10⁶ und 5x10⁶.

Bevorzugt werden weiterhin auch lineare Stärken, vorzugsweise Polyglucane, insbesondere 1,4-a-D-Polyglucan, mit Molekulargewichten M_{w} im Bereich zwischen 5x10² und 1x10⁵, bevorzugt mit Molekulargewichten M_{w} zwischen 1x10³ und 5x10⁴.

Neben Formmassen auf Basis von Stärken nativen pflanzlichen Ursprungs gehören zur Erfindung auch solche thermoplastischen Mischungen oder Formmassen mit Stärken, die chemisch modifiziert sind, fermentativ gewonnen werden, rekombinanten Ursprungs sind oder durch Biotransformation (Biokatalyse) hergestellt wurden. Synonym für den Begriff "Biotransformation" verwendet man auch den Begriff "Biokatalyse".

Unter "chemisch modifizierten Stärken² versteht die Erfindung solche Stärken, bei denen auf chemischem Wege die Eigenschaften im Vergleich zu den natürlichen Eigenschaften verändert wurden. Dies wird im wesentlichen durch polymeranaloge Umsetzungen erreicht, bei denen Stärke mit mono-, bi- oder polyfunktionellen Reagenzien bzw. Oxidationsmitteln behandelt wird. Dabei werden vorzugsweise die Hydroxygruppen der Polyglucane der Stärke durch Veretherung, Veresterung oder selektive Oxidation umgewandelt oder die Modifizierung beruht auf einer radikalisch initiierten Propfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie z. B. nichtionische, anionische oder kationische Stärkeether, oxidierte Stärken, wie etwa Dialdehydstärke, Carboxystärke, Persulfat-abgebaute Stärken und ähnliche Substanzen.

"Fermentative Stärken² sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Gum Arabicum und verwandte Polysaccharide (Gellan Gum, Gum Ghatti, Gum Karaya, Gum Tragacauth), Xanthan, Emulsan, Rhamsan, Wellan, Schizophyllan, Polygalacturonate, Laminarin, Amylose, Amylopektin und Pektine.

Mit "Stärken rekombinanten Ursprungs² oder "rekombinante Stärken² meint die Erfindung im einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien gewonnen werden oder unter Einschaltung und Mithilfe von fermentativen Prozessen gewonnen werden können. Beispiele für Stärken aus fermentativen, gentechnisch modifizierten Prozessen sind neben anderen Amylose, Amylopektin und Polyglucane.

"Durch Biotransformation hergestellte Stärken² bedeutet im Rahmen der Erfindung, daß Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen Polyglucan und modifizierte Polyglucane, Polyfructan und modifizierte Polyfructane.

Schließlich lassen sich auch unter Verwendung von Derivaten der einzelnen genannten Stärken vorteilhafte thermoplastische Mischungen erhalten. Dabei bedeuten die Begriffe "Derivate von Stärken² oder "Stärkederivate² ganz allgemein modifizierte Stärken, d. h. solche Stärken, bei denen zur Veränderung ihrer Eigenschaften das natürliche Amylose/Amylopektin-Verhältnis verändert wurde, eine Vorverkleisterung durchgeführt wurde, die einem partiellen hydrolytischen Abbau unterzogen wurden oder die chemisch derivatisiert wurden.

Zu besonderen Derivaten von Stärken gehören unter anderem oxidierte Stärken, z.B. Dialdehydstärke oder sonstige Oxidationsprodukte mit Carboxylfunktionen, oder native ionische Stärken (z.B. mit Phosphatgruppen) oder ionisch weiter modifizierte Stärken, wobei sowohl anionische als auch kationische Modifizierungen gemeint sind.

Zu den destrukturieren Stärken, die im Rahmen der Erfindung eingesetzt werden können, gehören solche, die z.B. mittels Glyzerin so homogenisiert worden sind, daß in der Röntgendiffraktion keine kristallinen Reflexe mehr auftreten und im Polarisationsmikroskop Stärkekörner oder doppelbrechende Regionen bei tausendfacher Vergrößerung nicht mehr sichtbar sind. In diesem Zusammenhang wird auf die DE-A1-3931363 verwiesen, auf deren Offenbarung sich hier ausdrücklich bezogen wird.

Die erfindungsgemäß eingesetzten Weichmacher sind größtenteils wie z.B. Gluconsäure, Galacturonsäure, Glucarsäure oder Glucuronsäure käufliche Produkte. Im übrigen können sie durch entsprechende Oxidation aus den zu den Kohlenhydraten gehörenden Zucker erhalten werden. In diesem Zusammenhang wird auf das Lehrbuch der Organischen Chemie von Beyer, Walter, S. Hitzel Verlag, Stuttgart, 1991, 22. Auflage, Seiten 431-432, Absatz 2 verwiesen. Auf diese Offenbarung wird sich hier ausdrücklich bezogen.

Zu den weiteren Polymeren, die mit eingesetzt werden können, zählen vor allem Proteine wie pflanzliche Proteine, z.B. Sonnenblumenprotein, Baumwollsamenprotein u.dgl., aber auch Plasmaprotein, Eiweiß u. dgl..

Es war besonders überraschend, daß es gemäß der Erfindung möglich ist, zu Zusammensetzungen zu gelangen, die besonders homogen sind und sich in hervorragender Weise zu Formkörpern, insbesondere auf thermoplastische Weise durch Verformen, Spritzgießen usw. verarbeiten lassen. So sind Filme, Häute, Verpackungen, Behälter usw. zugänglich, die in unmittelbarem Kontakt mit Lebensmitteln oder Pharmazeutika stehen können.

Der Weichmacher ist physiologisch unbedenklich, er neigt nicht zur Migration und läßt sich auch kaum aus dem Formkörper herauslaugen, z.B. durch Flüssigkeiten, welche aus Lebensmitteln heraustreten können. Da Gluconsäure bzw. das korrespondierende Lacton, sowie andere Verbindungen der hier als Weichmacher beschriebenen Stoffklasse, konservierende Eigenschaften aufweisen, sind entsprechende Formkörper bei Anwendungen auf dem Lebensmittelgebiet und der Pharmazeutik besonders vorteilhaft.

Die Formkörper sind nicht spröde und weisen somit keinen Abrieb auf, sie sind transparent. Die erfindungsgemäß eingesetzten Weichmacher treten in der Zusammensetzung in besonders vorteilhafter Weise in Wechselwirkung, die bei bekannten Weichmachern wie Sorbit, Glyzerin usw. nicht zu beobachten sind. Insbesondere hat sich gezeigt, daß es vorteilhaft ist bei einem pH-Wert zu arbeiten der größer 7 ist, besonders bevorzugt in dem Bereich von 8 bis 10 liegt. Aber auch bei höheren pH-Werten bis zu einem pH-Wert von 13 lassen sich die Weichmacher der vorliegenden Erfindung vorteilhaft einsetzen. Sofern der pH-Wert in starkem Maße von dem Neutralwert 7 abweicht, ist die Menge des Weichmachers zu erhöhen. Insbesondere beim Verarbeiten im sauren pH-Bereich ist es gegebenenfalls erforderlich wesentlich höhere Mengen an Weichmacher einzusetzen, als dies beim Arbeiten im alkalischen Bereich notwendig ist.

Die erfindungsgemäße thermoplastische Formmasse läßt sich nach den bekannten Verarbeitungsverfahren zu Produkten verarbeiten. So kann sie z. B. in einem ersten Schritt granuliert oder pelletisiert werden.

Gegenstand der Erfindung ist somit auch ein Granulat, das durch Extrusion und Pelletisierung aus der thermoplastischen Mischung gemäß der Erfindung erhältlich ist.

Außerdem können entweder direkt oder durch erneutes thermoplastisches Verarbeiten eines sich thermoplastisch verhaltenden Granulats biologisch gut abbaubare Formteile oder Folien mit verbesserten mechanischen Eigenschaften erhalten werden.

Schließlich gehört zur Erfindung insbesondere auch die Verwendung der thermoplastischen Mischungen zur Herstellung von Formteilen oder Folien. Insgesamt decken die erfindungsgemäßen Produkte damit eine Vielzahl von Anwendungsmöglichkeiten ab. Hierzu gehören im einzelnen unter anderem Klebstoffadhäsive für Papier und Wellpappe, Formkörper, die durch Spritzguß hergestellt werden, vor allem Stäbe, Rohre, Flaschen, Kapseln, Granulate, Lebensmittelzusatzstoffe, Filme, als Überzüge oder freistehende Filme, auch als Laminate, vor allem Folien, Verpackungsmaterialien, Beutel, Retardmaterialien zur kontrollierten Freisetzung von Wirkstoffen im allgemeinen, insbesondere Pharmaka, Pestizide oder andere in der Agrikultur eingesetzte Wirkstoffe, Dünger, Aromastoffe etc. Dabei kann die Freigabe der aktiven Substanz aus Filmen, Folien, Preßlingen, Partikeln, Mikropartikeln, Stäbchen oder anderen Extrudaten oder sonstigen Formkörpern erfolgen.

Weitere bevorzugte Anwendungen umfassen Lebensmittelverpackungen, insbesondere Wurst- oder Käsehüllen, Absorber, Puder und dergleichen.

In einer besonderen Ausführungsform werden die thermoplastischen Mischungen gemäß der Erfindung zur Herstellung von Formkörpern zur kontrollierten Freigabe von Wirkstoffen, wie etwa Tabletten oder Dragées, verwendet.

Eine weitere zweckmäßige und besonders günstige Verwendung der thermoplastischen Mischung gemäß der Erfindung betrifft die Herstellung von Formkörpern, die sich zur Herstellung von massiven Formkörpern, Hohlkörpern oder Kombinationen davon eignen.

Noch eine herausragende Verwendung der erfindungsgemäßen thermoplastischen Mischung ist in der Herstellung von Folien zum Gebrauch in der Landwirtschaft angesiedelt.

In weiters besonderer Abwandlung sieht die Erfindung die Verwendung der thermoplastischen Mischung zur Herstellung von Folien zum Gebrauch in der Lebensmittelanwendung vor.

Noch eine spezielle erfindungsgemäße Verwendung der thermoplastischen Mischung liegt in der Herstellung von Folien zum Gebrauch als Lebensmittelumverpackung.

Eine weiterhin ausgesprochen günstige Verwendung der thermoplastischen Mischung gemäß der Erfindung ergibt sich bei der Herstellung von Folien zum Gebrauch als Lebensmittelverpackung mit vollständigem Flächenkontakt zum Lebensmittel.

Schließlich ist auch eine Verwendung der thermoplastischen Mischung gemäß der Erfindung besonders vorteilhaft, bei der Flach- oder tubulare Folien zur Verwendung als Lebensmittelhüllen für Wurst und Käse hergestellt werden.

Außerdem bevorzugt ist im Rahmen der Erfindung die Verwendung der thermoplastischen als temporäre Schutzfilme für technische Gebrauchsgegenstände.

Die Erfindung wird anhand folgender Beispiele näher erläutert.

### Beispiele:

### Beispiel 1

### Herstellung einer thermoplastischen Formmasse aus Kartoffelstärke und Gluconsäurelacton bei basischem pH-Wert

Die Massen werden in einem Knetaggregat hergestellt (IKA Duplex Kneter). Das Knetaggregat wird auf 140 °C geheizt. 150 g Kartoffelstärke (Toffena der Fa. Südstärke) werden im Betriebszustand des Knetaggregats zugegeben. 22,5 g Gluconsäure-d-lacton (15 Gew. %) wird in ca. 70 g entionisiertem Wasser (pH = 7) gelöst (pH = 3 bis 4) und der pH-Wert auf 8 eingestellt durch Zugabe von 1 mol NaOH-Lösung. Durch Zugabe weiteren entionisierten Wassers wird die Gesamtmenge Wasser auf 75 g eingestellt. Der pH-Wert wird mit einem pH-Meter der Fa. WTW (pH 538) kontrolliert (Eichung gegen Phosphatpuffer). Die Lösung wird langsam in dünnen Strahl zur Stärke in den Kneter überführt. Im Anschluß wird solange geknetet (ca. 20 bis 30 Minuten) bis die Masse glasig wird. Die Thermoplastifizierung erfolgt bei geschlossenen Deckel, der zur Beobachtung kurzzeitig entfernt werden kann. Der Kneter wird angehalten, die Aufsätze entfernt und die Formmasse in noch warmen Zustand entnommen. Die Formmasse ist glasig, zäh und flexibel. Nach dem Erkalten kann die thermoplastische Masse weiterverarbeitet werden. Durch den Erkaltungsprozeß wird die Formmasse zunehmend härter. Sie behält jedoch eine gewisse Flexibilität.

### Beispiel 2a und b

### Herstellung weiterer thermoplastischer Formmassen aus Kartoffelstärke und Gluconsäurelacton bei basischem pH-Wert

Die Versuche werden wie in Beispiel 1 beschrieben jedoch mit variierenden Gehalten an Gluconsäure-d-lacton durchgeführt. Gluconsäure-d-lacton: (5 und 30 Gew. %).

### Beispiel 3 (Vergleichsbeispiel)

### Herstellung einer thermoplastischer Formmasse aus Kartoffelstärke und Glucose bei basischem pH-Wert

Die Verbindungen werden in einem Knetaggregat hergestellt (IKA Duplex Kneter). Das Knetaggregat wird auf 140 °C geheizt. 150 g Kartoffelstärke (z.B. Toffena der Fa. Südstärke) werden im Betriebszustand des Knetaggregats zugegeben. 22,5 g Glucose (15 Gew. %) wird in ca. 70 g entionisiertem Wasser (pH = 7) und die Lösung durch Zugabe von 1 mol NaOH-Lösung auf pH = 8 eingestellt. Durch Zugabe weiteren entionisierten Wassers wird die Gesamtmenge Wasser auf 75 g eingestellt. Der pH-Wert wird mit einem pH-Meter der Fa. WTW (pH 538) kontrolliert (Eichung gegen Phosphatpuffer). Die Lösung wird langsam in dünnen Strahl zur Stärke in den Kneter überführt. Im Anschluß wird solange geknetet (ca. 20 bis 30 Minuten) bis die Masse glasig wird. Die Thermoplastifizierung erfolgt bei geschlossenen Deckel, der zur Beobachtung kurzzeitig entfernt werden kann. Der Kneter wird angehalten, die Aufsätze entfernt und die Formmasse in noch warmen Zustand entnommen. Die Formmasse ist glasig, zäh, braun verfärbt. Nach dem Erkalten kann die thermoplastische Masse weiterverarbeitet werden. Durch den Erkaltungsprozeß wird die Formmasse zunehmend härter.

### Beispiel 4

Herstellung einer Folie mittels Preßtechnik aus thermoplastischen Formmassen, enthaltend Stärke und Gluconsäure-d-lacton (z.B. Beispiele 1 und 2).

Die thermoplastische Formmasse wird zu einer Folie mittels Preßtechnik verarbeitet. Hierzu wird eine handelsübliche Presse der Fa. Schwabenthan (Polystat 300 S) verwendet. Die Presse wird auf 130 °C vorgeheizt. Die Probenpräparation erfolgt in einer "Sandwich-Technik" zwischen zwei gewebeverstärkten Teflonfolien, die mit einem etwa 100 mm dicken metallischen Rahmen auf Abstand gehalten werden. Etwa 2 g der im Kneter hergestellten Masse werden bei der Präparation in Mitte der unteren Folie plaziert. Die Probe wird 5 Minuten bei 100 °C und einem Druck von 1 t temperiert. Anschließend wird die Probe bei 100 °C für 5 Minuten und einem Druck von 10 t gepreßt. Dies entspricht aufgrund der Geometrie der verwendeten Presse einem Druck von 200 bar. Die Presse wird entlastet und die Probe wird an eine andere Presse zwecks Abkühlung überführt. Hierbei handelt es sich um eine wassergekühlte Presse der Fa. Robert Fuchs Hydraulische Maschinen und Werkzeuge. Während des Abkühlvorgangs über eine Zeit von 2 Minuten wird ein Druck von 50 bar angelegt.

Die Eigenschaften der vorstehend beschriebenen Produkte sind in Tabelle I zusammengefaßt.

**Tabelle I:**

| Thermoplastische Formmassen mit Gluconsäurelacton oder Glucose, sowie Beurteilung der daraus bei 130 °C gefertigten Filme | | | | | | |
|---|---|---|---|---|---|---|
| **Stärke** | **Weichmacher (%)** | **pH-Wert** | **Temperatur Kneter (°C)** | **Zustand Formmasse** | **Temperatur Presse (°C)** | **Zustand Film** |
| Kartoffelstärke | Gluconsäur e-d-lacton 5 | 8 | 140 | homogen, zäh, flexibel; nach 24 h bei Raumtemperatur: flexibel (Beispiel 2a) | 130 | transparent, homogen, klar, flexibel |
| Kartoffelstärke | Gluconsäur e-d-lacton 15 | 8 | 140 | homogen, zäh, flexibel; nach 24 h bei Raumtemperatur: flexibel (Beispiel 1) | 130 | transparent, homogen, klar, sehr flexibel |
| Kartoffelstärke | Gluconsäur e-d-lacton 30 | 8 | 140 | homogen, zäh, flexibel; nach 24 h bei Raumtemperatur: flexibel (Beispiel 2b) | 130 | opak, strukturiert, flexibel |
| Kartoffelstärke | Glucose 15 | 8 | 140 | homogen, zäh, flexibel; nach 24 h bei Raumtemperatur: hart, spröde (Beispiel 3, Vergleichsbeispiel) | 130 | schimmernd, trübe, braun gefärbt, sehr starr, sehr brüchig |

### Beispiel 5

### Herstellung einer thermoplastischen Formmasse aus Kartoffelstärke und Gluconsäurelacton und einem weiteren Weichmacher bei basischem pH-Wert

Die Verbindungen werden in einem Knetaggregat hergestellt (Brabender Kneter). Das Knetaggregat wird auf 140 °C geheizt. 30 g Kartoffelstärke (z.B. Toffena der Fa. Südstärke) werden im Betriebszustand des Knetaggregats zugegeben. 1,5 g Gluconsäure-d-lacton wird in 10 g entionisiertem Wasser (pH = 7) gelöst (pH = 3 bis 4). Der pH-Wert auf 8 durch Zugabe von 1 mol NaOH-Lösung eingestellt. Durch die Zugabe weiteren entionisierten Wassers wird die gesamte Menge an Wasser auf 15 g eingestellt. Der pH-Wert wird mit einem pH-Meter der Fa. WTW (pH 538) kontrolliert (Eichung gegen Phosphatpuffer). Der Lösung werden 3 g Glyzerin hinzugegeben. Die Lösung wird langsam in dünnen Strahl zur Stärke in den Kneter überführt. Im Anschluß wird solange geknetet (ca. 20 bis 30 Minuten) bis die Masse glasig wird. Die Thermoplastifizierung erfolgt bei geschlossenen Deckel, der zur Beobachtung kurzzeitig entfernt werden kann. Der Kneter wird angehalten, die Aufsätze entfernt und die Formmasse in noch warmen Zustand entnommen. Die Formmasse ist glasig, zäh und flexibel. Nach dem Erkalten kann die thermoplastische Masse weiterverarbeitet werden. Die Formmasse ist glasig und zäh. Durch den Erkaltungsprozeß wird die Formmasse zunehmend härter. Sie behält jedoch eine gewisse Flexibilität.

### Beispiel 6

### Herstellung einer thermoplastischen Formmasse aus Kartoffelstärke und Gluconsäurelacton und einem weiteren Weichmacher bei saurem pH-Wert

Die Verbindungen werden in einem Knetaggregat hergestellt (Brabender Kneter). Das Knetaggregat wird auf 140 °C geheizt. 30 g Kartoffelstärke (z.B. Toffena der Fa. Südstärke) werden im Betriebszustand des Knetaggregats zugegeben. 1,5 g Gluconsäure-d-lacton wird in 10 g entionisiertem Wasser (pH = 7) gelöst (pH = 3 bis 4) und die Lösung auf einen pH-Wert von 2 durch Zugabe von 1 mol HCI-Lösung eingestellt. Hierzu werden etwa 2 bis 3 ml der Salzsäurelösung benötigt. Durch Zugabe weiteren entionisierten Wassers wird die Gesamtmenge Wasser auf 15 g eingestellt. Der pH-Wert wird mit einem pH-Meter der Fa. WTW (pH 538) kontrolliert (Eichung gegen Phosphatpuffer). Der Lösung werden 3 g Glyzerin hinzugegeben. Die Lösung wird langsam in dünnen Strahl zur Stärke in den Kneter überführt. Im Anschluß wird solange geknetet (ca. 20 bis 30 Minuten) bis die Masse glasig wird. Die Thermoplastifizierung erfolgt bei geschlossenen Deckel, der zur Beobachtung kurzzeitig entfernt werden kann. Der Kneter wird angehalten, die Aufsätze entfernt und die Formmasse in noch warmen Zustand entnommen. Die Formmasse ist glasig und zäh und flexibel. Durch den Erkaltungsprozeß wird die Formmasse zunehmend härter. Nach dem Erkalten kann die thermoplastische Masse weiterverarbeitet werden.

### Beispiel 7

### Herstellung weiterer thermoplastischer Formmassen aus Kartoffelstärke und Gluconsäurelacton, sowie einem weiteren Weichmacher bei unterschiedlichen pH-Werten

Die Versuche werden wie in Beispiel 5 und 6 beschrieben mit variierenden pH-Wert durchgeführt (pH-Werte: 2, 4 ,6, 8, 10, 12).

### Beispiel 8

### Herstellung zweier thermoplastischer Formmassen aus Kartoffelstärke und Gluconsäurelacton, sowie einem weiteren Weichmacher bei pH 7

Die Versuche wurden prinzipiell wie in den Beispielen 5 und 6 beschrieben durchgeführt. Der Unterschied bestand darin, daß in einem Fall der pH Wert durch Zugabe von 1 molarer NaOH-Lösung direkt auf pH 7 eingestellt wurde. Um die Vergleichbarkeit mit der höheren Salzfracht in den Versuchen, die einen vom neutralen pH-Wert stark abweichenden Zustand aufzeigen, zu gewährleisten, wurde in einem zweiten Versuch wie folgt verfahren. Der pH-Wert wird zunächst mit 1 molarer NaOH-Lösung auf pH 12 eingestellt. Im Anschluß daran wird mit einer 1 molaren HCl-Lösung erneut auf pH 7 erniedrigt. Es wurden keine Unterschiede in der Herstellung der Mischungen beobachtet.

Die Folien aus den Formmassen, wurden durch die Verarbeitung der thermoplastischen Formmassen der Beispiele 5 bis 8 gemäß der Versuchsbeschreibung in Beispiel 4 hergestellt. Die Temperatur bei der Herstellung der thermoplastischen Formmassen betrug in allen Fällen 140°C. Die Temperatur beim Verpressen war 130 °C.

### Tabelle 2:

Beurteilung thermoplastischer Formmassen aus Kartoffelstärke und Gluconsäurelacton und einem weiteren Weichmacher, sowie Beurteilung der daraus bei 130°C gefertigten Filme

**Tabelle II:**

| | | | | | | |
|---|---|---|---|---|---|---|
| **Stärke** | **Wasser (%)** | **Glyzerin** | **Glucon-säure-d- lacton** | **pH- Wert** | **Zustand der Formmasse** | **Zustand der Folien** |
| Kartoffelstärke | 50 | 10 | 5 | 2 | glasig, zäh, homogen, farblos; nach 24 h bei Raumtemperatur: hart | brüchig, spröde, transparent, leicht inhomogen, farblos |
| Kartoffelstärke | 50 | 10 | 5 | 4 | glasig, zäh, homogen, farblos; nach 24 h bei Raumtemperatur: hart | flexibel, transparent, leicht inhomogen, farblos |
| Kartoffelstärke | 50 | 10 | 5 | 6 | glasig, zäh, homogen, farblos; nach 24 h bei Raumtemperatur: flexibel | flexibel, transparent, homogen, farblos |
| Kartoffelstärke | 50 direkte Einstellung | 10 | 5 | 7 | glasig, zäh, homogen, farb- los; nach 24 h bei Raumtemperatur: flexibel | sehr flexibel, transparent, homogen, farblos |
| Kartoffelstärke | 50 über pH 12 auf pH 7 | 10 | 5 | 7 | glasig, zäh, homogen, farblos; nach 24 h bei Raumtemperatur: flexibel | sehr flexibel, transparent, homogen, farblos |
| Kartoffelstärke | 50 | 10 | 5 | 8 | glasig, zäh, homogen, farb- los; nach 24 h bei Raumtemperatur: flexibel | flexibel, transparent, homogen, farblos |
| Kartoffelstärke | 50 | 10 | 5 | 10 | glasig, zäh, homogen, farb- los; nach 24 h bei Raumtemperatur: flexibel | flexibel, opak, leicht inhomogen, farblos |
| Kartoffelstärke | 50 | 10 | 5 | 12 | glasig, zäh, homogen, braun gefärbt; nach 24 h bei Raumtemperatur: flexibel | brüchig, spröde, nicht transparent, inhomogen, braun gefärbt |

### Beispiel 9

### Herstellung einer Mischung aus einer thermoplastischen Mischung enthaltend Stärke, 1,4-a-D-Polyglucan und Gluconsäurelacton zur weiteren Verarbeitung mittels eines Zweischneckenextruders

Es werden 2 kg Kartoffelstärke (Kartoffelmehl z.B. der Marke Toffena™ der Firma Südstärke) und 0,5 kg 1,4-a-D-Polyglucan (Amylose) miteinander gemischt und manuell homogenisiert. (Der Einsatz eines Mixers (z.B. normales Küchengerät ist für die beschriebenen Mengen ausreichend) bietet sich an, wenn die Korngrößen der verwendeten Polymere stark voneinander abweichen.) Anschließend werden langsam 300 g Gluconsäure-d-lacton zugegeben. Währenddessen wird das Gemisch manuell unter Beachtung der Sicherheitsvorschriften (Einmalhandschuhe für den Laborbedarf) geknetet. Nach beendeter Zugabe und zu Beginn des Knetvorgangs ist die Masse stark klebrig und es bilden sich größere Agglomerate. Im lauf der Homogenisierung wird die Masse zunehmend trockener und pulveriger, was auf die Absorption der polaren Additive durch die Stärke und Amylose zurückzuführen ist. Die auf diese Weise hergestellte Mischung kann direkt zur weiteren Verarbeitung an einem Extruder verwendet werden.

### Beispiel 10

### Herstellung von Extrusionsfolien Mischung aus einer thermoplastischen Mischung enthaltend Stärke, 1,4-a-D-Polyglucan und Gluconsäurelacton mittels eines Zweischneckenextruders

Dieser Versuch wird mit der in Beispiel 9 hergestellten Polymermischung in einem Zweischneckenextruder durchgeführt (Haake Rheomex PTW 25/28p). Bei den verwendeten Schnecken handelt es sich um die Standardausführung der konischen Variante. Der Extruder ist mit vier variabel ansteuerbaren Heizelementen versehen. Die Verarbeitungstemperatur beträgt in allen Zonen 140 °C. Die Temperaturverläufe werden on-line mittels der handelsüblichen Software aufgezeichnet. Die Massetemperatur an der Düse ist im Durchschnitt zehn Grad Celsius über der Temperatur der Heizelemente. Die Drehzahl beträgt 25 Umdrehungen pro Minute. Der Austritt des Extrudates erfolgt durch eine sog. Breitschlitzdüse mit den Abmessungen 100 mm Breite und 0,2 mm Höhe (Höhenverstellbarkeit zwischen 0,2 mm und 1,0 mm).

Der Extruder wird stark überfüttert gefahren, d.h. am Einzug wird Substanz in ausreichender Menge zur Verfügung gestellt. Darüber hinaus wird mittels eines Stempels die permanente Zufuhr gewährleistet. Es ist darauf zu achten, daß der Stofftransport möglichst gleichmäßig erfolgt. Der Stempel besteht aus hochleistungsfähigem Kunststoff (wahlweise Holz), um den Metallabrieb eines entsprechenden Werkzeugs auszuschließen.
Nach einer Vorlaufzeit von ca. 10 Minuten tritt das Extrudat zunächst milchig trüb aus der Düse aus. Anfangs ist der extrudierte Film sehr flexibel. Nach kurzer Zeit erstarrt der Film an der Luft. Er wird durch ein nachgeschaltetes Transportband weiterbefördert. Der extrudierte Film ist im warmen Zustand dehnbar, jedoch nimmt diese Eigenschaft mit dem Abkühlvorgang zusehends ab.
Die auf diese Weise erhaltenen Proben können einer weiteren Analytik, z.B. Ermittlung der Wasserbeständigkeit, mechanische Eigenschaften, ohne weitere Behandlung (Reinigung oder Veredelung) unterzogen werden.

### Beispiel 11

### Herstellung einer thermoplastischen Formmasse aus Kartoffelstärke, Ascorbinsäure und weiteren Additiven

Die Verbindungen werden in einem Knetaggregat hergestellt (Brabender Kneter). Das Knetaggregat wird auf 140 °C geheizt. 30 g Kartoffelstärke (z.B. Toffena der Fa. Südstärke) werden im Betriebszustand des Knetaggregats zugegeben. Es werden 15 g entionisiertes Wasser addiert. Nach einer Homogenisierungsphase von ca. 10 Minuten werden zunächst 5,1 g Ascorbinsäure und anschließend 1 g Glyoxal (40 %ige wäßrige Lösung) hinzugegeben. Die Mischung wird homogenisiert und nach weiteren 10 Minuten im Kneter in noch heißem Zustand des Gerätes entnommen. Die Formmasse ist glasig und zäh. Im weiteren Verlauf (nach ca. 24 h bei Raumtemperatur) wird die Masse zunehmend härter. Nach dem Erkalten kann die thermoplastische Masse weiterverarbeitet werden.

### Beispiel 12

### Herstellung von Folien bei 100 °C aus thermoplastischen Formmassen mit Gluconsäurelacton oder Glucose

Die Formmassen für die Herstellung der Folien in diesem Beispiel (Tabelle III) wurden analog der Beispiele 1 bis 3 hergestellt. Es werden die Eigenschaften der Folien verglichen, die dadurch erhalten werden, daß gemäß Beispiel 4 bei einer Temperatur von 100°C gearbeitet wird. (Vergleichsbeispiele bei 130°C sind in Beispiel 4 gegeben.)

**Tabelle III:**

| Beurteilung von Folien aus thermoplastischer Formmassen mit Gluconsäurelacton oder Glucose durch Verarbeitung bei 100 °C | | | | | |
|---|---|---|---|---|---|
| **Stärke** | **Weich- macher (%)** | **pH- Wert*** | **Temperatur Kneter (°C)** | **Temperatur Presse (°C)** | **Zustand Film** |
| Kartoffelstärke | Gluconsäur e-d-lacton 5 | 8 | 140 | 100 | transparent, sehr flexibel |
| Kartoffelstärke | Gluconsäur e-d-lacton 15 | 8 | 140 | 100 | transparent, sehr flexibel |
| Kartoffelstärke | Gluconsäur e-d-lacton 30 | 8 | 140 | 100 | flexibel, transparent (nach ca. 2 Tagen Eintrübung) |
| Kartoffelstärke | Glucose 15 | 8 | 140 | 100 | transparent, brüchig, hart |

| | | | | | |
|---|---|---|---|---|---|
| * Die Angaben des pH-Wertes beziehen sich auf die Herstellungsbedingungen der thermoplastischen Formmassen. | | | | | |

### Beispiel 13

### Herstellung von Folien bei 100 °C aus thermoplastischen Formmassen mit Gluconsäurelacton oder Glucose, die bei verschiedenem pH-Wert hergestellt wurden

Die Formmasse der Tabelle IV zugrundeliegenden Daten wurden analog den Beispielen 5 und 6 hergestellt, mit dem Unterschied, daß auf die Zumischung eines zweiten Weichmachers verzichtet wird. Die Folien wurden analog Beispiel 4 bei einer Temperatur von 100°C hergestellt.

**Tabelle IV:**

| Beurteilung von Folien aus thermoplastischer Formmassen durch Verarbeitung bei 100 °C | | | | | |
|---|---|---|---|---|---|
| **Stärke** | **Weich- macher (%)** | **pH- Wert*** | **Temperatur Kneter (°C)** | **Temperatur Presse (°C)** | **Zustand Film** |
| Kartoffelstärke | Gluconsäured-lacton 5 | 2 | 140 | 100 | transparent, semiflexibel |
| Kartoffelstärke | Gluconsäured-lacton 15 | 4 | 140 | 100 | transparent, sehr flexibel |
| Kartoffelstärke | Glucose 15 | 8 | 140 | 100 | transparent, brüchig, hart |

| | | | | | |
|---|---|---|---|---|---|
| * Die Angaben des pH-Wertes beziehen sich auf die Herstellungsbedingungen der thermoplastischen Formmassen. | | | | | |

## Patentansprüche

1. Stärke und/oder modifizierte Stärke und Weichmacher enthaltende Zusammensetzungen zur Herstellung von Formkörpern, insbesondere biologisch abbaubaren Formkörpern, **dadurch gekennzeichnet, daß** die Zusammensetzungen mindestens ein Polymer auf Basis von Stärke und/oder modifizierter Stärke und als Weichmacher von Aldosen und/oder Ketosen abgeleitete Polyhydroxycarbonsäuren bzw. deren Lactone, ausgenommen Ascorbinsäure in Mengen bis 1 Gew.-% bezogen auf die Feststoffe der Zusammensetzungen, sowie ggf. weitere Polymere, insbesondere Biopolymere und Zusatzstoffe wie Streckmittel, Gleitmittel, Entformungsmittel, Farbstoffe, Wasser und dgl. enthalten.

2. Zusammensetzungen nach Anspruch 1, **dadurch gekennzeichnet, daß** sie von Pentosen und Hexosen abgeleitete Polyhydroxycarbonsäuren bzw. deren Lactone als Weichmacher enthalten.

3. Zusammensetzungen nach Anspruch 1 oder 2, **dadurch gekennzeichnet, daß** sie als Weichmacher Zuckersäuren bzw. deren Lactone enthalten.

4. Zusammensetzungen nach Anspruch 1 oder 2, **dadurch gekennzeichnet, daß** sie als Weichmacher Onsäuren bzw. deren Lactone enthalten.

5. Zusammensetzungen nach Anspruch 1 oder 2, **dadurch gekennzeichnet, daß** sie als Weichmacher Uronsäuren bzw. deren Lactone enthalten.

6. Zusammensetzungen nach Anspruch 4, **dadurch gekennzeichnet, daß** sie als Weichmacher Gluconsäure und/oder Gluconsäurelacton enthalten.

7. Zusammensetzungen nach Anspruch 5, **dadurch gekennzeichnet, daß** sie als Weichmacher Glucuronsäure und/oder Glucuronsäurelacton enthalten.

8. Zusammensetzungen nach mindestens einem der Ansprüche 1 bis 7, **dadurch gekennzeichnet, daß** sie 2 bis 30 Gew.-% Weichmacher enthalten.

9. Zusammensetzung nach mindestens einem der Ansprüche 1 bis 8, **dadurch gekennzeichnet, daß** sie destrukturierte Stärke enthalten.

10. Zusammensetzungen nach mindestens einem der Ansprüche 1 bis 9, **dadurch gekennzeichnet, daß** sie hydrolytisch abgebaute Stärke enthalten.

11. Zusammensetzungen nach mindestens einem der Ansprüche 1 bis 10, **dadurch gekennzeichnet, daß** sie chemisch modifizierte Stärke enthalten.

12. Zusammensetzungen nach mindestens einem der Ansprüche 1 bis 11, **dadurch gekennzeichnet, daß** kationisch oder anionisch modifizierte Stärke enthalten.

13. Zusammensetzungen nach mindestens einem der Ansprüche 1 bis 12, **dadurch gekennzeichnet, daß** sie als weitere Polymere Proteine enthalten.

14. Zusammensetzungen nach mindestens einem der Ansprüche 1 bis 13, **dadurch gekennzeichnet, daß** die Zusammensetzungen auf einen pH-Wert von 6 bis 10, vorzugsweise 8 bis 10 eingestellt sind.

15. Zusammensetzungen nach mindestens einem der Ansprüche 1 bis 14, **dadurch gekennzeichnet, daß** die Zusammensetzungen weitere Weichmacher enthalten.

16. Zusammensetzungen nach Anspruch 15, **dadurch gekennzeichnet, daß** die Zusammensetzungen insgesamt 3 bis 50, vorzugsweise 5 bis 30 Gew.-% Weichmacher enthalten.

17. Verwendung der Zusammensetzungen nach mindestens einem der Ansprüche 1 bis 16 zur Herstellung von Formkörpern.

18. Verwendung nach Anspruch 17 zur Herstellung von Verpackungen für Lebensmittel.

19. Verwendung nach Anspruch 17 zur Herstellung von Wursthäuten.

20. Verwendung nach Anspruch 17 zur Herstellung von Verpackungen für Pharmazeutika.

21. Verwendung nach Anspruch 17 zur Herstellung von Formkörpern zur kontrollierten Abgabe von Wirkstoffen.

22. Verwendung der Zusammensetzungen nach mindestens einem der Ansprüche 1 bis 16 zur Herstellung von temporären Schutzüberzügen von technischen Geräten.

23. Verfahren zur Herstellung von Zusammensetzungen, welche Stärke und/oder modifizierte Stärke und Weichmacher sowie ggf. weitere Polymere und Zusatzstoffe wie Streckmittel, Gleitmittel, Antioxidantien, Entformungsmittel, Wasser u. dgl. enthalten, durch Mischen und Homogenisieren, **dadurch gekennzeichnet, daß** man als Weichmacher von Aldosen und/oder Ketosen abgeleitete Polyhydroxycarbonsäuren bzw. deren Lactone verwendet.

24. Verfahren nach Anspruch 23 **dadurch gekennzeichnet, daß** man durch Zusatz einer Base den pH-Wert der Zusammensetzung auf 8 bis 13 einstellt.

## Claims

1. A composition comprising starch and/or modified starch and plasticizers for producing shaped articles, in particular shaped biodegradable articles, wherein the compositions comprise at least one polymer based on starch and/or on modified starch and, as plasticizers, polyhydroxycarboxylic acids derived from aldoses and/or from ketoses or comprise lactones of these acids except ascorbic acid in amounts of up to 1% by weight, based on the solids in the composition, and also, if desired, comprise other polymers, in particular biopolymers and additives, such as extenders, lubricants, mold-release agents, dyes, water and the like.

2. A composition as claimed in claim 1, which comprises, as plasticizers, polyhydroxycarboxylic acids derived from pentoses and hexoses, or comprises lactones of these acids.

3. A composition as claimed in claim 1 or 2, which comprises, as plasticizers, sugar acids or lactones of these acids.

4. A composition as claimed in claim 1 or 2, which comprises, as plasticizers, aldonic acids or lactones of these acids.

5. A composition as claimed in claim 1 or 2, which comprises, as plasticizers, uronic acids or lactones of these acids.

6. A composition as claimed in claim 4, which comprises, as plasticizers, gluconic acid and/or gluconolactone.

7. A composition as claimed in claim 5, which comprises, as plasticizers, glucuronic acid and/or glucuronolactone.

8. A composition as claimed in at least one of claims 1 to 7, which comprises from 2 to 30% by weight of plasticizers.

9. A composition as claimed in at least one of claims 1 to 8, which comprises destructured starch.

10. A composition as claimed in at least one of claims 1 to 9, which comprises hydrolytically degraded starch.

11. A composition as claimed in at least one of claims 1 to 10, which comprises chemically modified starch.

12. A composition as claimed in at least one of claims 1 to 11, which comprises cationically or anionically modified starch.

13. A composition as claimed in at least one of claims 1 to 12, which comprises proteins as other polymers.

14. A composition as claimed in at least one of claims 1 to 13, whose pH has been set at from 6 to 10, preferably from 8 to 10.

15. A composition as claimed in at least one of claims 1 to 14, which comprises other plasticizers.

16. A composition as claimed in claim 15, which comprises a total of from 3 to 50% by weight, preferably from 5 to 30% by weight, of plasticizers.

17. The use of the composition as claimed in at least one of claims 1 to 16 for producing shaped articles.

18. The use as claimed in claim 17 for producing packaging for food or drink.

19. The use as claimed in claim 17 for producing sausage casings.

20. The use as claimed in claim 17 for producing packaging for pharmaceutical products.

21. The use as claimed in claim 17 for producing shaped articles for the controlled release of active substances.

22. The use of the compositions as claimed in at least one of claims 1 to 16 for producing temporary protective coatings for technical devices.

23. A process for preparing compositions which comprise starch and/or modified starch and plasticizers and also, if desired, other polymers and additives, such as extenders, lubricants, antioxidants, mold-release agents, water and the like, by mixing and homogenizing, which comprises using, as plasticizers, polyhydroxycarboxylic acids derived from aldoses and/or from ketoses, or using lactones of these acids.

24. The process as claimed in claim 23, wherein the pH of the composition is set at from 8 to 13 by adding a base.

## Revendications

1. Compositions pour la préparation de corps moulés, en particulier de corps moulés biodégradables, contenant de l'amidon et/ou de l'amidon modifié et des plastifiants, **caractérisées en ce que** les compositions contiennent au moins un polymère à base d'amidon et/ou d'amidon modifié et, comme plastifiants, des acides polyhydroxycarboxyliques dérivés d'aldoses et/ou de cétoses ou leurs lactones, à l'exception de l'acide ascorbique en des quantités allant jusqu'à 1 % en masse par rapport aux matières solides des compositions, et éventuellement d'autres polymères, en particulier des biopolymères et des additifs comme des diluants, des lubrifiants, des agents de démoulage, des colorants, de l'eau et analogues.

2. Compositions selon la revendication 1, **caractérisées en ce qu'**elles contiennent comme plastifiants des acides polyhydroxycarboxyliques dérivés de pentoses et d'hexoses ou leurs lactones.

3. Compositions selon la revendication 1 ou 2, **caractérisées en ce qu'**elles contiennent comme plastifiants des acides sacchariniques ou leurs lactones.

4. Compositions selon la revendication 1 ou 2, **caractérisées en ce qu'**elles contiennent comme plastifiants des acides oniques ou leurs lactones.

5. Compositions selon la revendication 1 ou 2, **caractérisées en ce qu'**elles contiennent comme plastifiants des acides uroniques ou leurs lactones.

6. Compositions selon la revendication 4, **caractérisées en ce qu'**elles contiennent comme plastifiant de l'acide gluconique et/ou une lactone de l'acide gluconique.

7. Compositions selon la revendication 5, **caractérisées en ce qu'**elles contiennent comme plastifiant de l'acide glucuronique et/ou une lactone de l'acide glucuronique.

8. Compositions selon l'une au moins des revendications 1 à 7, **caractérisées en ce qu'**elles contiennent 2 à 30 % en masse de plastifiants.

9. Compositions selon l'une au moins des revendications 1 à 8, **caractérisées en ce qu'**elles contiennent de l'amidon déstructuré.

10. Compositions selon l'une au moins des revendications 1 à 9, **caractérisées en ce qu'**elles contiennent de l'amidon dégradé par hydrolyse.

11. Compositions selon l'une au moins des revendications 1 à 10, **caractérisées en ce qu'**elles contiennent de l'amidon modifié par voie chimique.

12. Compositions selon l'une au moins des revendications 1 à 11, **caractérisées en ce qu'**elles contiennent de l'amidon modifié par voie cationique ou anionique.

13. Compositions selon l'une au moins des revendications 1 à 12, **caractérisées en ce qu'**elles contiennent des protéines comme autres polymères.

14. Compositions selon l'une au moins des revendications 1 à 13, **caractérisées en ce que** les compositions sont amenées à un pH de 6 à 10, de préférence de 8 à 10.

15. Compositions selon l'une au moins des revendications 1 à 14, **caractérisées en ce que** les compositions contiennent d'autres plastifiants.

16. Compositions selon la revendication 15, **caractérisées en ce que** les compositions contiennent en tout 3 à 50, de préférence 5 à 30 % en masse de plastifiants.

17. Utilisation des compositions selon l'une au moins des revendications 1 à 16 pour la préparation de corps moulés.

18. Utilisation selon la revendication 17 pour la préparation d'emballages pour produits alimentaires.

19. Utilisation selon la revendication 17 pour la préparation de peaux de saucisses.

20. Utilisation selon la revendication 17 pour la préparation d'emballages pour des produits pharmaceutiques.

21. Utilisation selon la revendication 17 pour la préparation de corps moulés pour la libération contrôlée de substances actives.

22. Utilisation des compositions selon l'une au moins des revendications 1 à 16 pour la préparation de revêtements protecteurs temporaires d'appareils techniques.

23. Procédé de préparation de compositions contenant de l'amidon et/ou de l'amidon modifié et des plastifiants, ainsi qu'éventuellement d'autres polymères et des additifs comme des diluants, des lubrifiants, des antioxydants, des agents de démoulage, de l'eau et analogues, par mélange et homogénéisation, **caractérisé en ce que** l'on utilise comme plastifiants des acides polyhydroxycarboxyliques dérivés d'aldoses et/ou de cétoses ou leurs lactones.

24. Procédé selon la revendication 23, **caractérisé en ce que** l'on amène le pH de la composition à une valeur de 8 à 13 en ajoutant une base.
